**Europäisches Patentamt**

**European Patent Office**

**Office européen des brevets**

(19)

(11) Veröffentlichungsnummer : **0 232 292 B1**

# (12) EUROPÄISCHE PATENTSCHRIFT

(45) Veröffentlichungstag der Patentschrift :
03.01.90

(21) Anmeldenummer : 86904082.4

(22) Anmeldetag : 01.07.86

(86) Internationale Anmeldenummer :
PCT/DE 86/00269

(87) Internationale Veröffentlichungsnummer :
WO/8700789 (12.02.87 Gazette 87/04)

(51) Int. Cl.⁵ : **B 25 J 9/04**, B 25 J 19/00

(54) SCHWENKARMROBOTER.

(30) Priorität : 10.08.85 DE 3528769

(43) Veröffentlichungstag der Anmeldung :
19.08.87 Patentblatt 87/34

(45) Bekanntmachung des Hinweises auf die Patenterteilung : 03.01.90 Patentblatt 90/01

(84) Benannte Vertragsstaaten :
CH DE FR GB IT LI

(56) Entgegenhaltungen :
DE—A— 2 224 349
DE—A— 3 310 107
DE—U— 8 511 473

(73) Patentinhaber : ROBERT BOSCH GMBH
Postfach 50
D-7000 Stuttgart 1 (DE)

(72) Erfinder : GOSDOWSKI, Gerhard
Camberleystr. 83
D-7120 Bietigheim-Bissingen (DE)

EP 0 232 292 B1

## Beschreibung

### Stand der Technik

Die Erfindung geht aus von einem Schwenkarmroboter naoh der Gattung des Hauptanspruchs. Bei einem bekannten Schwenkarmroboter dieser Gattung, der zwei hintereinandergeschaltete Schwenkarme und Gelenkachsen mit elektrischen Motoren hat, sitzt der Motor für die den Grundkörper mit dem ersten Schwenkarm verbindende erste Gelenkachse am Grundkörper, während der Motor für die die beiden Schwenkarme verbindende zweite Gelenkachse am ersten Schwenkarm befestigt ist. Unter der Bezeichnung Schwenkachse wird hier das gesamte, auch die mechanischen Lagerelemente einschließende Schwenkgelenk verstanden. Am zweiten Schwenkarm ist ein Greifer oder dgl. und ein zu dessen Antrieb bestimmter weiterer Motor befestigt. Bei dieser Anordnung ist jeder Schwenkarm mit elektrischen Bauteilen und Installationseinrichtungen versehen und die elektrischen Energie- und Steuerkabel sind in zwei Stränge aufgeteilt, von denen der eine vom Grundkörper zum ersten Schwenkarm und der zweite von ersten zum zweiten Schwenkarm führt. Das bedingt einen verhältnismäßig hohen Installationsaufwand und außerdem ist am zweiten Schwenkarm die Masse ungünstig verteilt, weil sowohl der Greifer oder dgl. samt seinem Antrieb als auch die Anschlußeinrichtung für die Energiezufuhr in Bezug auf die Gelenkachse einseitig am zweiten Schwenkarm angeordnet sind.

### Vorteile der Erfindung.

Die erfindungsgemäße Anordnung mit den kennzeichnenden Merkmalen des Hauptanspruchs hat demgegenüber den Vorteil, daß mindestens an einem Schwenkarm elektrische Bauteile und Mittel zum Anschließen und Weiterleiten der Antriebsenergie entfallen, wodurch der Aufwand für Bearbeitung, Montage und Installation verringert wird.

Durch die in den Unteransprüchen aufgeführten Maßnahmen sind vorteilhafte Weiterbildungen der im Anspruch 1 angegebenen Anordnung möglich.

Bei einem Schwenkarmroboter mit nur zwei Schwenkarmen wird vorgeschlagen, daß der Motor für die den Grundkörper mit dem ersten Schwenkarm verbindende erste Gelenkachse in bekannter Weise am Grundkörper sitzt und der Motor für die den ersten Schwenkarm mit dem zweiten Schwenkarm verbindende zweite Gelenkachse am zweiten Schwenkarm angeordnet ist. Dadurch ist erreicht, daß der erste Schwenkarm nur mechanische Lagerungs- und Getriebeelemente, jedoch keine elektrischen Antriebs- und Installationseinrichtungen benötigt und daß die Mittel zum Zuführen der Antriebsenergie unmittelbar vom Grundkörper zum zweiten Schwenkarm geführt werden können, welcher ohnehin Antriebsenergie für den Greifer oder dgl. benötigt.

Eine platzsparende Ausführung, bei welcher sämtliche Motoren auf einer Seite der Schwenkarme angeordnet werden können, ergibt sich, wenn der zweite Schwenkarm den ersten Schwenkarm auf der gleichen Seite übergreift wie eine den Motor für die erste Gelenkachse tragende Antriebskonsole des Grundkörpers. In diesem Fall kann der erste Schwenkarm vorteilhaft die Form eines gestreckten, von mindestens annähernd ebenen Seitenflächen begrenzten Körpers haben, wodurch seine Fertigung erleichtert wird. Eine ähnliche Ausführung ergibt sich aus der DE-A-33 10 107.

Eine günstige Massenverteilung am zweiten Schwenkarm ergibt sich, wenn der zweite Schwenkarm aus zwei in Bezug auf seine Gelenkachse sich mindestens annähernd diametral gegenüberliegenden Armteilen besteht, von denen der eine den Greifer oder dgl. samt dessen Antrieb und der andere die Anschlußeinrichtung für die Energiezufuhr der Antriebe am zweiten Schwenkarm trägt.

### Zeichnung

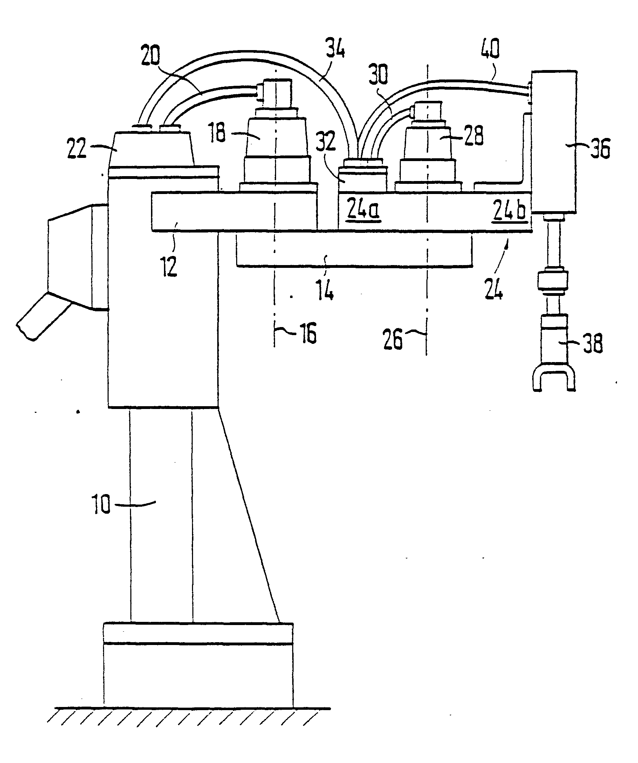

Ein Ausführungsbeispiel der Erfindung ist in der Zeichnung dargestellt und in der nachfolgenden Beschreibung näher erläutert. Die einzige Figur zeigt vereinfacht eine Seitenansicht eines mit zwei Schwenkarmen und mit elektrischen Antrieben an den Gelenkachsen versehenen Schwenkarmroboters.

### Beschreibung des Ausführungsbeispiels

Der Schwenkarmroboter hat einen als Stativ ausgebildeten Grundkörper 10, der eine seitlich ausladende Antriebskonsole 12 hat, an welcher ein erster Schwenkarm 14 um eine erste Gelenkachse 16 drehbar gelagert ist. Auf der Antriebskonsole 12 ist koaxial zur Gelenkachse 16 ein elektrischer Motor 18 befestigt, der über ein im Inneren des Schwenkarms 14 angeordnetes Getriebe, vorzugsweise ein Harmonic-Drive-Getriebe, auf den Schwenkarm 14 einwirkt und diesen gegenüber dem Grundkörper 10 zu drehen vermag. Der Motor 18 ist über einen Kabelstrang 20 mit einer elektrischen Installationseinrichtung 22 am Grundkörper 10 verbunden.

Am abtriebsseitigen Ende des ersten Schwenkarmes 14 ist ein zweiter Schwenkarm 24 um eine zweite Gelenkachse 26 drehbar gelagert. Am zweiten Schwenkarm 24 ist koaxial zur Gelenkachse 26 ein zweiter elektrischer Motor 28 befestigt, der über ein im Inneren des ersten Schwenkarmes 14 angeordnetes Getriebe, vorzugsweise ebenfalls ein Harmonic-Drive-Getriebe, den zweiten Schwenkarm 24 gegenüber dem ersten Schwenkarm 14 um die Gelenkachse 26 zu drehen vermag. Der Motor 28 ist über einen Kabelstrang 30 mit einer Installationseinrichtung 32 verbunden, die ihrerseits über einen Kabelstrang 34 an die Installationseinrichtung 22 am Grundkörper 10 angeschlossen ist.

Der zweite Schwenkarm 24 besteht aus zwei Armteilen 24a und 24b, die sich in Bezug auf die Gelenkachse 26 diametral gegenüberliegen. Der Armteil 24a trägt die elektrische Installationseinrichtung 32, wogegen am anderen Armteil 24b ein elektrischer Antrieb 36 für einen Greifer 38 befestigt ist. Der Antrieb 36 kann den Greifer heben und senken und die Greiferbacken öffnen und schließen. Im Bedarfsfall kann in bekannter Weise ein vom Grundkörper 10 ausgehender, über Zwischenräder auf den Gelenkachsen 16, 26 führender Drehantrieb für den Greifer 38 vorgesehen sein. Der Antrieb 36 ist über einen Kabelstrang 40 mit der elektrischen Installationseinrichtung 32 am Schwenkarm 24 verbunden.

Der zweite Schwenkarm 24 und die Antriebskonsole 12 des Grundkörpers 10 übergreifen beide den ersten Schwenkarm 14 auf dessen Oberseite, wodurch es möglich ist, beide Motoren 18 und 28 wie beim Stand der Technik etwa in gleicher Höhe nebeneinander anzuordnen. Außerdem ist durch diese Anordnung erreicht, daß beide Schwenkarme 14, 24 als im wesentlichen gerade gestreckte Körper ohne Abstufungen an den senkrecht zu den Gelenkachsen 16, 26 angeordneten Seitenflächen ausgebildet sein können, wodurch die Fertigung vereinfacht und der Bearbeitungsaufwand verringert wird.

Durch die Anordnung der Motoren 18, 28 am Grundkörper 10 und dem zweiten Schwenkarm 24 ist erreicht, daß der erste Schwenkarm völlig frei von elektrischen Antriebs- und Installationsteilen ist und nur mechanische Lagerungs- und Getriebeelemente enthält. Dadurch wird die Montage vereinfacht und der Installationsaufwand verringert. Durch die Anordnung der Installationseinrichtung 32 auf dem Armteil 24a des Schwenkarmes 24 wird der Masseschwerpunkt des Schwenkarmes 24 mitsamt den daran befestigten Teilen näher an die Gelenkachse 26 herangerückt und dadurch die Gerätedynamik verbessert.

**Patentansprüche**

1. Schwenkarmroboter mit einem feststehenden Grundkörper und mindestens zwei hintereinandergeschalteten Schwenkarmen, deren Gelenkachsen (Schwenkgelenke) mit motorischen, vorzugsweise elektrischen Antrieben versehen sind, deren Motoren je an dem einen Gelenkteil einer Gelenkachse befestigt sind, dadurch gekennzeichnet, daß mindestens ein Schwenkarm (14) motorlos ausgebildet ist, jedoch die mechanischen Getriebeelemente und die entsprechenden Lagerungselemente des Gelenkes enthält, und daß die Motoren (18, 28) der beiden diesem Schwenkarm (14) zugeordneten Gelenkachsen (16, 26) an den beiden benachbarten Gelenkteilen (10, 24) befestigt sind.

2. Schwenkarmroboter nach Anspruch 1, mit zwei Schwenkarmen, dadurch gekennzeichnet, daß der Motor (18) für die den Grundkörper (10) mit dem ersten Schwenkarm (14) verbindende erste Gelenkachse (16) in bekannter Weise am Grundkörper (10) und der Motor (28) für den ersten Schwenkarm (14) mit dem zweiten Schwenkarm (24) verbindende zweite Gelenkachse (26) am zweiten Schwenkarm (24) angeordnet ist.

3. Schwenkarmroboter nach Anspruch 2, dadurch gekennzeichnet, daß der zweite Schwenkarm (24) den ersten Schwenkarm (14) auf der gleichen Seite übergreift wie eine den Motor (18) für die erste Gelenkachse (16) tragende Antriebskonsole (12) des Grundkörpers (10).

4. Schwenkarmroboter nach Anspruch 3, dadurch gekennzeichnet, daß der erste Schwenkarm (14) die Form eines gestreckten, von mindestens annähernd ebenen, ungestuften Seitenflächen begrenzten Körpers hat.

5. Schwenkarmroboter nach Anspruch 3, dadurch gekennzeichnet, daß der zweite Schwenkarm (24) aus zwei in Bezug auf seine Gelenkachse (26) sich mindestens annähernd diametral gegenüberliegenden Armteilen (24a, 24b) besteht, von denen der eine (24b) den Greifer (38) oder dgl. samt Antrieb (38) und der andere (24a) eine Anschlußeinrichtung (32) für die Energiezufuhr der Antriebe (28, 36) trägt.

**Claims**

1. Swivel-arm robot, comprising a fixed basic body and at least two swivel arms which are arranged one behind the other and whose articulation axes (swivel articulations) are provided with motor drives, preferably electric drives, whose motors are each fixed to the one articulation part of an articulation axis, characterized in that at least one swivel arm (14) is designed so as to be motorless but contains the mechanical gear-train elements and the corresponding bearing elements of the articulation, and in that the motors (18, 28) of the two articulation axes (16, 26) allocated to this swivel arm (14) are fixed to the two adjacent articulation parts (10, 24).

2. Swivel-arm robot according to Claim 1, comprising two swivel arms, characterized in that the motor (18) for the first articulation axis (16), connecting the basic body (10) to the first swivel arm (14), is arranged in a known manner on the basic body (10), and the motor (28) for the second articulation axis (26), connecting the first swivel arm (14) to the second swivel arm (24), is arranged on the second swivel arm (24).

3. Swivel-arm robot according to Claim 2, characterized in that the second swivel arm (24) overlaps the first swivel arm (14) on the same side as a drive cantilever (12) of the basic body (10), which drive cantilever (12) carries the motor (18) for the first articulation axis (16).

4. Swivel-arm robot according to Claim 3, characterized in that the first swivel arm (14) has the form of an elongated body defined by at least approximately planar side faces without steps.

5. Swivel-arm robot according to Claim 3, characterized in that the second swivel arm (24) consists of two arm parts (24a, 24b) which are located at least approximately diametrically opposite one another relative to its articulation axis (26) and of which one (24b) carries the gripper (38) or the like together with drive (38) and the other (24a) carries a connection device (32) for the power supply to the drives (28, 36).

## Revendications

1. Robot à bras pivotants, comportant un corps de base fixe et au moins deux bras pivotants montés l'un derrière l'autre, dont les axes d'articulation (articulations de pivotement) sont munis d'entraînements et mécanismes de transmission commandés par moteurs, et de préférence électriques, dont les moteurs sont fixés chacun à l'un des éléments articulés d'un axe d'articulation, robot caractérisé en ce que, au moins un bras pivotant (14) est constitué sans moteur, mais comprend cependant les éléments de transmission mécaniques et les éléments de support correspondants, et en ce que les moteurs (18, 28) des deux axes d'articulation (16, 26) associés à ce bras pivotant (14) sont fixés sur les deux éléments articulés (12, 24) voisins.

2. Robot à bras pivotants selon la revendication 1, comportant deux bras pivotants, caractérisé en ce que le moteur (18) prévu pour le premier axe d'articulation (16), reliant le corps de base (10) au premier bras pivotant (14) est monté, de manière connue, sur le corps de base (10), et le moteur (28) prévu pour le second axe d'articulation (26), reliant le premier bras pivotant (14) ou second bras pivotant (24) est monté sur le second bras pivotant (24).

3. Robot à bras pivotants selon la revendication 2, caractérisé en ce que le second bras pivotant (24) recouvre le premier bras pivotant (14) du même côté qu'une console d'entraînement (12) du corps de base (10), portant le moteur (18) prévu pour le premier axe d'articulation (16).

4. Robot à bras pivotants selon la revendication 3, caractérisé en ce que le premier bras pivotant (14) présente la forme d'un corps allongé, limité par des surfaces latérales non dénivelées, planes au moins approximativement.

5. Robot à bras pivotants selon la revendication 3, caractérisé en ce que le second bras pivotant (24) est constitué par deux parties de bras (24a, 24b) diamétralement opposées, au moins approximativement, par rapport à l'axe d'articulation (26) de ce bras (24), et dont l'une (24b) porte la griffe preneuse (38), ou autre organe analogue, avec son entraînement (36) et l'autre partie de bras (24a) porte un dispositif de raccordement (32) pour l'amenée d'énergie aux entraînements (28, 36).